(19) Europäisches Patentamt
European Patent Office
Office européen des brevets

(11) Publication number: 0 315 026 A2

# (12) EUROPEAN PATENT APPLICATION

(21) Application number: 88117737.2

(22) Date of filing: 25.10.88

(51) Int. Cl.[4]: C08G 69/44

(30) Priority: 04.11.87 US 117250

(43) Date of publication of application: 10.05.89 Bulletin 89/19

(84) Designated Contracting States: DE FR GB IT NL

(71) Applicant: GENERAL ELECTRIC COMPANY
1 River Road
Schenectady New York 12305(US)

(72) Inventor: Clagett, Donald Carl
193 Barlett Avenue
Pittfield Massachusetts 01201(US)
Inventor: Fox, Daniel Wayne
193 Dawes Avenue
Pittsfield Massachusetts 01201(US)
Inventor: Maresca, Louis Michael
100 East Covent Garden
Guilderland New York 12084(US)
Inventor: Shafer, Sheldon Jay
40 Day Street
Pittsfield Massachusetts 01201(US)

(74) Representative: Catherine, Alain
General Electric France Service de Propriété Industrielle 18 Rue Horace Vernet B.P. 76
F-92134 Issy-les-Moulineaux Cédex(FR)

## (54) Copolymers and process for the preparation thereof.

(57) Copolymers comprising amide units and arylate, carbonate, ester-carbonate or mixed such units are prepared by melt phase interchange of diaryl esters of dicarboxylic acids and diamines with dihydric phenols and diaryl esters of aromatic dicarboxylic acids and/or diaryl carbonates. The products are tough resins, useful per se as molding compounds, and to compatibilize and toughen other thermoplastic polymers.

EP 0 315 026 A2

Xerox Copy Centre

# COPOLYMERS AND PROCESS FOR THE PREPARATION THEREOF

## CROSS REFERENCE TO RELATED APPLICATION

This application is related to earlier filed commonly assigned application

| SERIAL NO. | FILING DATE | TITLE | APPLICANTS | STATUS |
|---|---|---|---|---|
| 812,483 | 12/23/85 | THERMOPLASTIC BLENDS WITH AMORPHOUS POLYMERS | L.M. Maresca D.C. Clagett U.S. Wascher | Pending |

## FIELD OF THE INVENTION

The present invention relates to copolymers, thermoplastic compositions comprising them, and processes useful in their preparation. More particularly, it is concerned with copolymers comprising amide units and carbonate, ester-carbonate and/or arylate units molding compositions comprising such copolymers and a melt phase process for their production by interchange of diaryl esters with diamines, dihydric phenols and/or diaryl carbonates.

## BACKGROUND OF THE INVENTION

Blends of polyamides with polycarbonates, poly(ester carbonates) and/or polyarylates are known to exhibit desirable properties including excellent solvent resistence, ductility resistance to brittle failure and, in some cases, transparancy when molded into articles. See, for example, the copending, commonly assigned U.S. patent application of L.M. Maresca, D.C. Claggett and U.S. Wascher, Serial No. 812,433, filed December 23, 1985. Novel amide-carbonate, ester-carbonate and/or arylate copolymers have now been prepared which have excellent and improved physical and mechanical properties, and good chemical resistance and barrier properties. The copolymers comprise random copolymers block copolymers and alternating copolymers. They can be prepared by a melt polymerization process which can be done in one stage to produce random copolymers, or in two stages to produce block or alternating copolymers A wide variety of diamines, diphenols and diacid esters can be used in the process in both steps. Carbonate esters can be added, but only in the second step of a two step process. If, for example, diphenyl iso/terephthalate and a diamine and a diphenol such as bisphenol A are reacted at a temperature of, for example, 120-320 °C, a copolymer will be smoothly produced at reduced pressures. Alternatively, if diphenyl iso/terephthalate and a diamine are reacted at a temperature of, for example , 120 °C to 270 °C, a polyamide is produced smoothly by the amine ester interchange. Addition of diphenyl iso/terephthalate and bisphenol A to the resulting reaction at 220 °C - 320 °C and reduced pressure produces a polyamide polyarylate block copolymer. Although Fox and Shafer, U.S. 4,567,249, disclose the melt preparation of polyamides by amine-ester interchange, there is no hint of suggestion in that patent to employ the process to produce copolymers from an amine and a dihydric phenol.

## SUMMARY OF THE INVENTION

According to the present invention, there are provided copolymers of the general formula

$$-\left[\underbrace{\left(NH-G-NH-\overset{\overset{O}{\|}}{C}-E-\overset{\overset{O}{\|}}{C}\right)_x}_{A}\underbrace{\left(O-Ar-O-\left(\overset{\overset{O}{\|}}{C}-Ar^1\right)_n\overset{\overset{O}{\|}}{C}\right)_y}_{B}\right]_z$$

wherein units A comprise from about 1 to about 99 percent by weight of said block copolymer and units B comprise from about 99 to about 1 percent by weight of said copolymer, where E is selected from divalent alkyl, aryl, cycloalkyl, arylalkyl and alkylaryl groups of from 1 to 30 carbon atoms or a mixture of any of the foregoing, optionally substituted with at least one chlorine, bromine, fluorine, nitro, nitrile, alkyl of from 1 to 6 carbon atoms, alkoxy of from 1 to 6 carbon atoms or aryl of from 6 to 20 carbon atoms; G is a divalent alkyl, aryl, cycloalkyl, arylalkyl or alkylaryl group of from about 2 to about 30 carbon atoms or a mixture of any of the foregoing, optionally interrupted with alkylene, arylene, carbonyl, ether, amino or sulfur-containing groups, optionally substituted with at least one of chlorine, bromine, fluorine, nitro, nitrile, alkyl of from 1 to 6 carbon atoms, alkoxy of from 1 to 6 carbon atoms, or aryl of from 6 to 20 carbon atoms; Ar and $Ar^1$ are, independently, a divalent aromatic carbocyclic group, of 6 to 20 carbon atoms optionally interrupted with alkylene, arylene, carbonyl, ether, amino, silicon-containing or sulfur-containing groups or mixtures of any of the foregoing such groups, optionally substituted with at least one of chlorine, bromine, fluorine, nitro, nitrile, alkyl of from 1 to 6 carbon atoms, alkoxy of from 1 to 6 carbon atoms, aryl of from 6 to 20 carbon atoms or a mixture of any of such groups, n is O or 1 or both O and 1, and x, y and z are each integers of from 1 to 100,000.

Preferred features of this aspect of the invention comprise random and block copolymers including alternating copolymers as defined above. Preferably the copolymer will have x and y of at least 15. Also preferred are copolymers wherein units of A comprises from about 20 to about 80 percent by weight and units of B comprise from about 80 to about 20 percent by weight of A and B combined, and especially preferred are copolymers wherein units of A comprise from about 40 to about 60 percent by weight and units of B comprise from about 60 to about 40 percent by weight of A and B combined. Special mention is made of copolymers as above defined wherein E and $Ar^1$ are

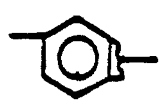 ,

Especially preferred are block copolymers wherein G is a residuum of a diamine selected from ethylenediamine, propylenediamine, tetramethylenediamine, pentamethylenediamine, 2-methylpentamethylenediamine, hexamethylenediamine, isomeric trimethylhexamethylenediamine, metaxylylenediamine, para-xylylenediamine, 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, 1,4-piperazine, meta-phenylenediamine, para-phenylenediamine, bis(4-aminophenyl)methane, and the like, or a mixture of any of the foregoing.

Also provided by the present invention is a process to make the copolymers above defined, said process comprising heating in a homogeneous melt a mixture of at least one diaryl ester of a dicarboxylic acid of the formulae

$$Ar^3\text{-}O\text{-}\overset{\overset{O}{\|}}{C}\text{-}E\text{-}\overset{\overset{O}{\|}}{C}\text{-}O\text{-}Ar^3$$

$Ar^3\text{-}O\text{-}\overset{\overset{O}{\|}}{C}\text{-}Ar^1\text{-}\overset{\overset{O}{\|}}{C}\text{-}O\text{-}Ar^3$ , or a mixture thereof, wherein $Ar^3$ represents the same or different aromatic moiety of from 6 to 20 carbon atoms, optionally substituted with at least one of chlorine, bromine, fluorine, nitro, nitrile, alkyl of from 1 to 6 carbon atoms, alkoxy of from 1 to 6 atoms or aryl of from 6 to carbon atoms and E and $Ar^1$ are as above defined, an amine of the formula

$R^2NH\text{-}G\text{-}NHR^2$

wherein G is as above defined and $R^2$ is hydrogen or alkyl of from 1 to 10 carbon atoms and, in addition, when taken together the same as G; and a dihydric phenol of the formula

HO-Ar-OH

wherein Ar is as above defined in Claim 1, alone, or in further combination with a diaryl carbonate of the formula

$$Ar^3\text{-O-}\overset{O}{\overset{\|}{C}}\text{-O-}Ar^3$$

wherein $Ar^3$ is as above defined and removing by product phenol until formation of said copolymer is complete. The diaryl carbonate can only be added in the second step of a two-step process.

This process can be carried out in one or two stages depending on the structure of the final copolymer desired. For example, carrying out the process in one stage with all components mixed produces a random copolymer in which x, y and z have no consistently recurring values. If, however, essentially stoichiometric amounts of the desired ester of a dicarboxylic acid and a diamine are reacted in the first stage followed by further polymerization in a second stage with essentially stoichiometric amounts of a diphenol and a diaryl ester of an aromatic dicarboxylic acid and/or a diaryl carbonate, then a block copolymer is formed wherein x and y are consistently greater than about 15. In a third variation, if 2 equivalents of a diaryl ester of a dicarboxylic acid are reacted with a diamine in step one then very small nylon oligomers are formed. Addition of a diphenol in a second step results in the formation of an essentially alternating amide-arylate copolymer. Values of x and y are essentially less than about 5. In all cases the combined concentration of the diamine and the diphenol must be essentially equal to the combined concentrations of diaryl esters and/or diaryl carbonates. Additionally, diaryl carbonates can only be used in the second stage of a two stage process. Also, if all of the diaryl ester is being added in the first step of a one or two stage process, it must be the diaryl ester of an aromatic dicarboxylic acid in order to insure the formation of a wholly aromatic polyester(polyarylate) with the diphenol.

Preferably, the diaryl ester used in the process comprises a diaryl terephthalate, a diaryl isophthalate, a diaryl adipate or a mixture thereof. Especially preferably, the diaryl ester will comprise diphenyl isophthalate, diphenyl terephthalate, diphenyl adipate or a mixture of any of them. Preferably also, the diamine comprises ethylenediamine,propylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl)cyclohexane, 1,4-bis(aminomethyl)cyclohexane, 1,3-diaminecyclohexane, 1,4-diaminocyclohexane, bis(4-aminocyclohexyl)methane, 2,2-bis(4-aminocyclohexyl)propane, 1,4-piperazine, meta-phenylenediamine, para-phenylenediamine, bis(4-aminophenyl)methane, and the like, or a mixture of any of the foregoing. Preferably also, when a diaryl carbonate is used in the second step of a two stage process it will comprise diphenyl carbonate. Special mention is made of a process wherein the dihydric phenol comprises bisphenol-A or a bisphenol-A substituted with chloro, fluoro, bromo, alkyl of 1 to 3 carbon atoms or a mixture of any of the foregoing. Preferably the dihydric phenol comprises bisphenol A.

Among the preferred features of the invention are block copolymers prepared in a melt phase process by the interchange of a diamine and a diaryl ester to produce a polyamide having amine or ester terminal groups and further interchanging the polyamide with a dihydric phenol and a diaryl ester of an aromatic dicarboxylic acid, alone, or in further combination with a diaryl carbonate to form a polyamide polyarylate, polyamide poly(ester carbonate) or polyamide polycarbonate block copolymer containing from about 1 to about 99 percent by weight of polyamide segments and from about 99 to about 1 percent by weight of polycarbonate, poly(ester-carbonate) and/or polyarlyate segments. In these, preferably, the diamine comprises a diprimary or disecondary alkyl amine.

The block copolymers are thermoformable into shaped articles which are tough, thermally and hydrolytically stable, chemically resistant and sometimes transparent. They also exhibit good barrier properties. They are also useful as blending resins, for example, with polycarbonates, polyarylates, poly(ester carbonates) and polyamides.

## DETAILED DESCRIPTION OF THE INVENTION

As examples of diamines particularly suitable for use in preparing the A unit can be mentioned diprimary and disecondary as well as mixed primary and secondary diamines of the general formula above. Illustrative examples are ethylenediamine, propylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl)cyclohexane, 1,4-bis(aminomethyl)cyclohexane, 1,3-diaminecyclohexane, 1,4-diaminocyclohexane, bis(4-aminocyclohexyl)-methane, 2,2-bis(4-aminocyclohexyl) propane, 1,4-piperazine, meta-phenylenediamine, para-phenylenediamine, bis(4-aminophenyl)methane, and the like, or a mixture of any of the foregoing.

Illustratively useful diesters suitable as sources for structural units E are esters of dicarboxylic acids such as diphenylic esters derived from phenolic compounds, e.g., a monohydric phenol, including phenol itself, and alkyl or halo-substituted phenols, such as o-, mand p-cresols, and o- and p- chlorophenol and the like, and a dicarboxylic acid, such as adipic, sebacic, azelaic, glutaric, phthalic, terephthalic, isophthalic, naphthalene dicarboxylic, biphenyl dicarboxylic acid, and the like. A preferred family of diesters comprise the diphenyl esters of terephthalic acid, isophthalic acid, and mixtures thereof.

The polyarylate, polycarbonate and/or poly (ester carbonate) units employed herein are aromatic units containing carboxylate groups,

$-\overset{O}{\overset{\|}{C}}-O$ and/or carbonate groups,

$-O-\overset{O}{\overset{\|}{C}}-O$, in which at least some of the carboxylate and/or carbonate groups join directly ring carbon atoms of the aromatic carbocyclic groups. Such units in general, are prepared by reacting a diaryl ester of an aromatic dicarboxylic acid and/or of carbonic acid and a dihydric phenol.

Preferred are units derived from dihydric phenols and dicarboxylic acids and or carbonic acid. The dicarboxylic acid portion contains from about 95 to 0 mole percent of terephthalic acid and from about 5 to about 100 mole percent of isophthalic acid. Units derived from carbonic acid can comprise up to 100 mole percent of B. Preferred polyarylate blocks contain a mixture of from about 0 to about 70 mole percent of terephthalic acid and from about 100 to about 30 mole percent of isophthalic acid.

Typical dihydric phenols useful in formulating the arylate carbonate and/or ester-carbonate units as described above may be represented by the general formula:

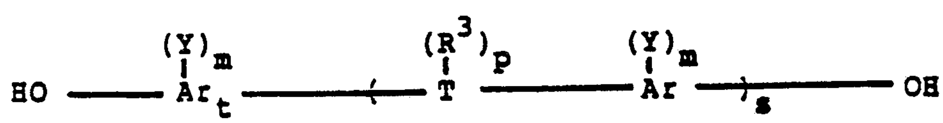

in which Ar is an aromatic group such as phenylene, biphenylene, naphthylene, anthrylene, etc. T may be an alkylene or alkylidene group such as methylene, ethylene, propylene, propylidene, isopropylidene, butylene, butylidene, isobutylidene, amylene, isoamylene, amylidene, isoamylidene, and generally from one to twelve carbon atoms, inclusive etc. Where T is an alkylene or alkylidene group, it may also consist of two or more alkylene or alkylidene groups, connected by a non-alkylene or non-alkylidene group, such as an aromatic linkage, a tertiary amino linkage, an ether linkage, a carbonyl linkage, a silicon-containing linkage, or by a sulfur-containing linkage such as sulfide, sulfoxide, sulfone, etc. In addition, T may be a cycloaliphatic group of five to seven carbon atoms, inclusive e.g. cyclopentyl, cyclohexyl, or a cycloalkylidene of five to seven carbon atoms, inclusive, such as cyclohexylidene; a sulfur-containing linkage, such as sulfide, sulfoxide or sulfone; an ether linkage; a carbonyl group; a direct bond; a tertiary nitrogen group; or a silicon-containing linkage such a silane or siloxy. Other groups which T may represent will occur to those skilled in the art. $R^3$ is hydrogen or a monovalent hydrocarbon group such as alkyl of one to eight carbon atoms, inclusive methyl, ethyl, propyl, etc.; aryl of 6 to 20 carbon atoms inclusive, phenyl, naphthyl, etc.; arylalkyl of 6 to 20 carbon atoms inclusive, benzyl, ethylphenyl, etc.; or cycloaliphatic of five to seven carbon atoms, inclusive cyclopentyl, cyclohexyl, etc. Y may be an inorganic atom such as chlorine, bromine, fluorine, etc; a nitro group, a nitrile group, etc.; and organic group such as $R^3$ above; or an oxy group such as $OR^3$, it being only necessary that Y be inert to and unaffected by the reactants and the reaction conditions. The letter m is any whole number from and including zero through the number of positions on Ar available for substitution; p is any whole number from and including zero through the number of available positions on T; t is a whole number equal to at least one; and s is any whole number from and including zero to twenty. In the typical dihydric phenol compound represented by formula above, when more than one Y substituent is present, they may be the same or different. The same is true for the $R^3$ substituent. Where s is greater than one, T can be the same or different. Where T is a direct bond, the aromatic rings are directly joined with no intervening alkylene or other bridge. The positions of the hydroxyl groups and Y on the aromatic nuclear residues, Ar, can be varied in the ortho, meta, or para positions; and the groupings can be in a vicinal, nonsymmetrical or symmetrical relationship, where two or more ring carbon atoms of the aromatic hydrocarbon residue are substituted with Y and a hydroxyl group.

Examples of dihydric phenol compounds that may be employed in the above polymers include:

2,2-bis-(4-hydroxyphenyl)propane, (bisphenol-A);

2,4-dihydroxydiphenylmethane;
bis-(2-hydroxyphenyl)methane;
bis-(4-hydroxyphenyl)methane;
bis-(4-hydroxy-5-nitrophenyl)methane;
bis-(4-hydroxy-2,6-dimethyl-3-methoxyphenyl)-methane;
1,1-bis-(4-hydroxyphenyl)ethane;
1,2-bis-(4-hydroxyphenyl)ethane;
1,1-bis-(4-hydroxy-2-chlorophenyl)ethane;
1,1-bis-(2,5-dimethyl-4-hydroxyphenyl)ethane;
1,3-bis-(3-methyl-4-hydroxyphenyl)propane;
2,2-bis-(3-methyl-4-hydroxyphenyl)propane;
2,2-bis-(3-isopropyl-4-hydroxyphenyl)propane;
2,2-bis-(4-hydroxynaphthyl)propane;
2,2-bis-(4-hydroxyphenyl)pentane;
3,3-bis-(4-hydroxyphenyl)heptane;
bis-(4-hydroxyphenyl)phenylmethane;
bis-(4-hydroxyphenyl)cyclohexylmethane;
1,2-bis-(4-hydroxyphenyl)-1,2-bis-(phenyl)propane;
2,2-bis-(4-hydroxyphenyl)-1-phenylpropane; and the like. Also included are dihydroxybenzenes typified by hydroquinone and resorcinol; dihydroxydiphenyls such as 4,4′-dihydroxydiphenyl; 2,2′-dihydroxydiphenyl; 2,4′-dihydroxydiphenyl; dihydroxy-naphthalenes such as 2,6-dihydroxynaphthalene, etc.

Also useful are dihydric phenols wherein T is a sulfur-containing radical such as the dihydroxy aryl sulfones exemplified by: bis-(4-hydroxyphenyl)sulfone; 2,4′-dihydroxydiphenyl sulfone: bis-(3,5-dimethyl-4-hydroxyphenyl)sulfone; 5′-chloro-2,4-dihydroxydiphenyl sulfone; 3-chloro-2,4-bis-(4-hydroxyphenyl) sulfone; and 4,4′-dihydroxytriphenyldisulfone; etc. The preparation of these and other useful sulfones are described in U.S. 2,288,282. Hydroxy terminated polysulfones as well as substituted sulfones using halogen, nitrogen, alkyl radicals, etc., are also useful.

Dihydroxy aromatic ethers such as those described in U.S. 3,148,172 are useful as the dihydric phenol herein. The dihydroxy aromatic ethers may be prepared as described in U.S. 2,739,171. Illustrative of such compounds are the following:
4,4′-dihydroxydiphenyl ether;
4,4′-dihydroxytriphenyl ether;
the 4,3′-ether, 4,2′-,4,1′-, 2,2′-, 2,3′-, etc. dihydroxydiphenyl ethers;
4,4′-dihydroxy-2,6-dimethyldiphenyl ether;
4,4′-dihydroxy-2,5-dimethyldiphenyl ether;
4,4′-dihydroxy-3,3′-diisobutyldiphenyl ether;
4,4′-dihydroxy-3,3′-diisopropyldiphenyl ether;
4,4′-dihydroxy-3,3′-dinitrodiphenyl ether;
4,4′-dihydroxy-3,3′-dichlorodiphenyl ether;
4,4′-dihydroxy-3,3′-difluorodiphenyl ether;
4,4′-dihydroxy-2,3′-dibromodihenyl ether;
6,6′-dihydroxydinaphthyl-2,2′-ether;
6,6′-dihydroxy-5,5′-dichlorodinaphthyl-2,2′-ether; 4,4′-dihydroxy-2,6-dimethoxydiphenyl ether 4,4′-dihydroxy-2,5-diethoxydiphenyl ether, etc.

Mixtures of the dihydric phenols can also be employed, and where dihydric phenol is mentioned herein mixtures of such materials are considered to be included. Other dihydric phenols which are suitable for the preparation of the above described polymers are disclosed in U.S. Pat. Nos. 2,999,835; 3.028,365; 3,334,154 ; 4,131,575.

In general, any aromatic ester of an aromatic dicarboxylic acid conventionally used in the preparation of polyesters, may be used for the preparation of the polyarylate and poly(ester carbonate) units described above. The esters of aromatic dicarboxylic acids which may be used include those of aliphatic-aromatic dicarboxylic acids, in addition to those of wholly aromatic carboxylic acids.

The aromatic dicarboxylic acids represented by the general formula:

$$Ar^3\text{-O-}\overset{\overset{\displaystyle O}{\|}}{C}\text{-}Ar^1\text{-}\overset{\overset{\displaystyle O}{\|}}{C}\text{-O-}Ar^3$$

wherein $Ar^1$ and $Ar^3$ are as defined above, $Ar^1$ being phenylene, naphthylene, biphenylene, substituted phenylene, etc.; two or more aromatic groups connected through non-aromatic linkages such as those defined by T above; or a divalent aliphatic-aromatic hydrocarbon radical such as an arylalkyl or alkylaryl

radical. For purposes of the present invention, $Ar^3$ is as defined above. Some nonlimiting examples of suitable diesters of aromatic dicarboxylic acids which may be used in preparing the units B of the instant invention include diaryl esters of phthalic acid, isophthalic acid, terephthalic acid, homophthalic acid, o-, m-, and p-phenylenediacetic acid, and the polynuclear aromatic acids such as diphenyl dicarboxylic acid, and isomeric naphthalene dicarboxylic acids. The aromatics may be substituted with Y groups in the same manner as the dihydric phenols are substituted. Of course, these esters may be used individually or as mixtures of two or more different acids. In those cases where a carbonic acid is used in part or alone to produce carbonate units B, typical of the carbonate esters are diphenyl carbonate, di(halophenyl)carbonates such as di(chlorophenyl)carbonate di(bromophenyl)carbonate, di(tribromophenyl)carbonate, etc.

In general, the process of the invention is carried out by heating a mixture of the calculated amount of reactants as described above. The reactor should permit removal of the byproduct phenolic compound as it is produced, e.g., by vacuum distillation. The resulting copolymer can be recovered in any convenient manner, for example, as a residue after vacuum devolatilization, or by precipitation from a solvent by means of an antisolvent, such as methanol. If desired, a minor amount of a high-boiling solvent, e.g., diphenyl ether, can be included in the reaction mixture to facilitate smooth removal of the byproduct. The products of the process may be molded in any desired shape and are useful as structural and engineering materials to replace traditional materials of construction, as stand alone resins, in blends with other resins such as amorphous nylons and as tie resins to bond two different resin layers.

## DESCRIPTION OF THE PEFERRED EMBODIMENTS

The following examples illustrate the invention. They are not to be construed to limit the claims in any manner whatsoever.

### EXAMPLE 1

A 4CV Helicone mixer was charged with 487.1 g (1.53 moles) of diphenyl isophthalate and 174.3 g (1.50 moles) of hexamethylenediamine and blanketed with nitrogen. Agitation was started and the temperature was raised to 180°C - 185°C. After 45 minutes the reaction temperature was increased to 200°C - 205°C and held there for 30 minutes prior to adding 318.3 g (1.00 moles) of diphenyl isophthalate, 232.9g (1.02 moles) of bisphenol A and 2.14 g (0.01 moles) of diphenyl carbonate. A 1.0 ml portion of a solution of 184 mg of $LiOH \cdot H_2O$ in 100 ml of water was added 15 minutes later and the reaction temperature gradually increased to 245°C - 250°C. After 30 minutes at 245°C - 250°C a vacuum was pulled on the system. The vacuum was gradually decreased from 125 mm of Hg to less than 2mm of Hg over a 1 hour period while the temperature was increased to 280°C - 285°C. These conditions were maintained for 1.5 hours before the vacuum was broken and the polymer discharged and allowed to cool to room temperature. The resulting block copolymer was tough and had an intrinsic viscosity (IV) as measured in phenol/tetrachloroethane (60/40) of 0.59 dl/g.

### EXAMPLE 2

Example 1 was repeated to produce a tough block copolymer with an IV of 0.54 dl/g.

### EXAMPLES 3 AND 4

Example 1 was repeatd except that the monomer concentrations were increased by a factor of 20 and the reaction was run in a larger 10CV Helicone. The block copolymers produced were tough and had IVs of 0.46 and 0.50 dl/g.

## EXAMPLES 5 AND 6

If the procedure of Example 1 is repeated, substituting for the hexamethylenediamine, 1,3-bis (aminomethyl)cyclohexane and 1,4-bis(aminomethyl) cyclohexane, copolymers according to this invention will be obtained.

## EXAMPLE 7 AND 8

If the procedure of Example 1 is repeated, substituting meta-xylylenediamine for all or part of hexamethylenediamine, a copolymer product according to this invention will be obtained.

## EXAMPLE 9 AND 10

If the procedure of Example 1 is repeated, substituting for the diphenyl isophthalate in one or both stages, a 50-50 weight/weight mixture of diphenyl isophthalate and diphenyl terephthalate, block copolymers according to this invention will be obtained.

## EXAMPLES 11 AND 12

If the procedure of Example 1 is repeated, substituting diphenyl carbonate for all or a greater portion of the diphenyl isophthalate employed in the second stage, a block copolymer in accordance with this invention will be obtained.

## EXAMPLE 13

If the procedure of Example 1 is repeated, but running in one step all of the reactants, a random copolymer in accordance with this invention will be obtained.

## EXAMPLE 14

The procedure of Example 1 is repeated except that 2 equivalents of diphenyl isophthalate is reacted with hexamethylenediamine in step 1. One equivalent of bisphenol A is added in step 2. An essentially alternating amide arylate copolymer in accordance with this invention is produced.

The above-mentioned patents and publications, are incorporated herein by reference.

Many variations of this invention will suggest themselves to those skilled in this art in light of the above, detailed description. For example, instead of diphenyl isophthalate and diphenyl terephthalate, the following diaryl esters can be used, diphenyl adipate, diphenyl sebacate, diphenyl glutarate, diphenyl naphthalene dicarboxylate, diphenyl biphenyl dicarboxylate, mixtures of any of the foregoing, and the like. Instead of hexamethylenediamine and the other diamines used, the following may be substituted: ethylenediamine, propylenediamine, tetramethylenediamine, pentamethylenediamine, 2-methylpentamethylenediamine, isomeric trimethylhexamethylenediamine, para-xylylenediamine, 1,3-diaminocyclohexane, 1,4-diaminocyclohexane, bis(4-aminocyclohexyl)-methane, 2,2-bis(4-aminocyclohexyl) propane, 1,4-piperazine, meta-phenylenediamine, para-phenylenediamine, bis(4-aminophenyl)methane, or a mixture of any of them. Instead of bisphenol A, there can be substituted tetrabromobisphenol-A, tetramethylbisphenol-A, dixylenol sulfone, mixtures of any of the foregoing and the like. All such obvious variations are within the full intended scope of the appended claims.

## Claims

1. A copolymer of the general formula

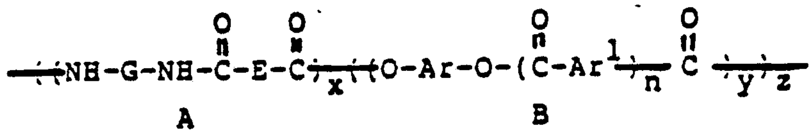

wherein units A comprise from about 1 to about 99 percent in weight of said copolymer and units B comprise from about 99 to about 1 percent by weight of said copolymer, where E is selected from divalent alkyl, aryl, cycloalkyl, arylalkyl and alkylaryl groups of from 1 to 30 carbon atoms or a mixture of any of the foregoing, optionally substituted with at least one chlorine, bromine, fluorine, nitro, nitrile, alkyl of from 1 to 6 carbon atoms, alkoxy of from 1 to 6 carbon atoms or aryl of from 6 to 20 carbon atoms; G is a divalent alkyl, aryl, cycloalkyl, arylalkyl or alkylaryl group of from about 2 to about 30 carbon atoms or a mixture of any of the foregoing, optionally interrupted with alkylene, arylene, carbonyl, ether, amino or sulfur-containing groups, optionally substituted with at least one of chlorine, bromine, fluorine, nitro, nitrile alkyl of from 1 to 6 carbon atoms, alkoxy of from 1 to 6 carbon atoms or aryl of from 6 to 20 carbon atoms; Ar and $Ar^1$ are, independently, divalent aromatic carbocyclic groups, optionally interrupted with alkylene, arylene, carbonyl, ether, amino, silicon-containing or sulfur-containing groups or mixtures of any of the foregoing such groups, optionally substituted with at least one of chlorine, bromine, fluorine, nitro, nitrile, alkyl of from 1 to 6 carbon atoms, alkoxy of from 1 to 6 carbon atoms, aryl of from 6 to 20 carbon atoms or a mixture of any of such group, n is 0 or 1 or both 0 and 1, and x, y and z are each integers of from 1 to 100,000.

2. A copolymer as defined in Claim 1 which is a block copolymer comprising segments of repeating units A and segments of repeating units B.

3. A copolymer as defined in Claim 2 wherein repeating units A and repeating units B are essentially alternating.

4. A copolymer as defined in Claim 1 which is a random copolymer.

5. A copolymer as defined in Claim 1 wherein units of A comprise from about 20 to about 80 percent by weight and units of B comprise from about 80 to about 20 percent by weight of A and B combined.

6. A copolymer as defined in Claim 5 wherein units of A comprise from about 40 to about 60 percent by weight and units of B comprise from about 60 to about 40 percent by weight of A and B combined.

7. A copolymer as defined in Claim 1 wherein E is the residue of a diacid selected from adipic, sebacic, azelaic, glutaric, phthalic, terephthalic, isophthalic, naphthalene dicarboxylic, biphenyl dicarboxylic acids or a mixture of any of the foregoing.

8. A copolymer as defined in Claim 1 wherein $Ar^1$ is the residue of a diacid selected from phthalic, terephthalic, isophthalic, naphthalene dicarboxylic, biphenyl dicarboxylic acids or a mixture of any of the foregoing.

9. A copolymer as defined in Claim 8 wherein $Ar^1$ is

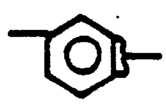

,

Ar is the residue of a dihydric phenol selected from bisphenol-A or a bisphenol-A substituted with chloro, fluoro, bromo, alkyl of 1 to 3 carbon atoms or a mixture of any of the foregoing.

10. A copolymer as defined in Claim 9 wherein Ar is a residue of bisphenol-A.

11. A copolymer as defined in Claim 1 wherein G is the residuum of a diamine selected from ethylenediamine, propylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4,-aminocyclohexyl) propane, 1,4-piperazine, meta-phenylenediamine, para-phenylenediamine, bis(4-aminophenyl)methane, and the like, or a mixture of any of the foregoing.

12. A process for the preparation of a copolymer as defined in Claim 1, said process comprising heating a mixture of at least one diaryl ester of the formulae

$$Ar^3\text{-O-}\overset{\overset{O}{\|}}{C}\text{-E-}\overset{\overset{O}{\|}}{C}\text{-O-}Ar^3,$$

$$Ar^3\text{-O-}\overset{\overset{O}{\|}}{C}\text{-Ar-}\overset{\overset{O}{\|}}{C}\text{-}Ar^3$$ or a mixture thereof wherein $Ar^3$ represent the same or different aromatic moiety of from 6 to 20 carbon atoms, optionally substituted with at least one of chlorine, bromine, fluorine, nitro, nitrile, alkyl of from 1 to 6 carbon atoms, alkoxy of from 1 to 6 carbon atoms or aryl of from 6 to 20 carbon atoms and E and $Ar^1$ is as defined in Claim 1, an amine of the formula

$R^2NH\text{-G-}NHR^2$

wherein G is as defined in Claim 1 and $R^2$ is hydrogen or alkyl of from 1 to 10 carbon atoms and, in addition, when taken together the same as G; and a dihydric phenol of the formula

HO-Ar-OH

wherein Ar is as defined in Claim 1, alone, or in further combination with a diaryl carbonate of the formula

$$Ar^3\text{-O-}\overset{\overset{O}{\|}}{C}\text{-O-}Ar^3$$

wherein $Ar^3$ is as defined above and removing byproduct phenol until formation of said copolymer is substantially complete.

13. A process as defined in Claim 12 comprising heating the diaryl ester of a dicarboxylic acid and the diamine in one stage and the dihydric phenol and the diaryl ester, of an aromatic dicarboxylic acid and/or diaryl carbonate in another stage whereby a block copolymer is produced.

14. A process as defined in Claim 13 comprising heating a large excess of the diaryl ester of an aromatic dicarboxylic acid with a diamine in one stage and then adding a diphenol is a second stage to produce an essentially alternating copolymer.

15. A process as defined in Claim 12 comprising heating all of the reactants in one reaction mixture whereby a random copolymer is produced.

16. A process as defined in Claim 12 wherein E is the residue of a diacid selected from adipic, sebacic, azaleic, glutaric, phthalic, terephthalic, isophthalic, naphthalene dicarboxylic, biphenyl dicarboxylic acids or a mixture of any of the foregoing.

17. A process as defined in Claim 12 wherein $Ar^1$ is the residue of a diacid selected from phthalic, terephthalic, isophthalic, naphthalene dicarboxylic, biphenyl dicarboxylic acids or a mixture of any of the foregoing.

18. A process as defined in Claim 12 wherein the diaryl ester comprises a diaryl terephthalate, a diaryl isophthalate or a mixture thereof.

19. A process as defined in Claim 18 wherein said diaryl ester comprises diphenyl isophthalate.

20. A process as defined in Claim 12 wherein the diamine comprises ethylenediamine, propylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl) cyclohexane, 1,4-bis(aminomethyl)cyclohexane, 1,3-diaminecyclohexane, 1,4-diaminocyclohexane, bis(4-aminocyclohexyl)methane, 2,2-bis(4,-aminocyclohexyl)propane, 1,4-piperazine, meta-phenylenediamine, para-phenylenediamine, bis(4-aminophenyl)methane, and the like, or a mixture of any of the foregoing.

21. A process as defined in Claim 12 wherein the reaction mixture also comprises a diaryl carbonate.

22. A process as defined in Claim 21 wherein said diaryl carbonate comprises diphenyl carbonate.

23. A process as defined in Claim 12 wherein the dihydric phenol comprises bisphenol-A or a bisphenol-A substituted with chloro, fluoro, bromo, alkyl of 1 to 3 carbon atoms or a mixture of any of the foregoing.

24. A process as defined in Claim 23 wherein the dihydric phenol comprises bisphenol-A.

25. A block copolymer prepared in a melt phase process by the interchange of a diamine and a diaryl ester to produce a polyamide having amine or ester terminal groups and further interchanging the polyamide with a dihydric phenol and a diaryl ester of an aromatic dicarboxylic acid, alone, or in further combination with a diaryl carbonate for form a block copolymer containing from about 1 to about 99 percent by weight of polyamide segments and from about 99 to about 1 percent by weight of polyarylate, polycarbonate and/or poly(ester carbonate) segments.

26. A block copolymer as defined in Claim 25 wherein the diaryl ester of an aromatic dicarboxylic acid comprises diphenyl isophthalate or diphenyl terephthalate, and the diaryl carbonate comprises diphenyl carbonate.

27. A block copolymer as defined in Claim 23 wherein said diamine comprises ethylenediamine, propylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl) cyclohexane, 1,4-bis(aminomethyl) cyclohexane, 1,3- diaminocyclohexane, 1,4-diaminocyclohexane, bis(4-aminocyclohexyl)methane, 2,2-bis(4,-aminocyclohexyl)propane, 1,4-piperazine, meta-phenylenediamine, para-phenylenediamine, bis(4-aminophenyl)methane, and the like, or a mixture of any of the foregoing.